# EUROPEAN PATENT SPECIFICATION

(11) **EP 3 263 219 B1**
(45) Date of publication and mention of the grant of the patent: **09.09.2020**
(21) Application number: 17176789.0
(22) Date of filing: 20.06.2017
(51) Int. Cl.: B01L 3/00, G01N 21/64, G01N 35/02

(54) **WELL PLATE AND METHOD OF USING THE SAME**
TESTPLATTE UND METHODE DER VERWENDUNG
PLAQUE À PUITS ET METHODE POUR SA UTILISATION

(30) Priority: 30.06.2016 JP 2016130483
(43) Date of publication of application: 03.01.2018
(73) Proprietor: SCREEN Holdings Co., Ltd., Kyoto 602-8585 (JP)
(72) Inventor: Ikefuji, Kunio, KYOTO-SHI, Kyoto 602-8585 (JP)
(74) Representative: Kilian Kilian & Partner

(56) References cited:
- WO-A1-2014/107811
- WO-A2-03/036265
- JP-A- 2004 340 759
- JP-A- 2012 127 964
- US-A- 6 051 191
- US-A1- 2008 020 455
- US-B1- 9 360 433

## Description

### BACKGROUND OF THE INVENTION

### (1) Field of the Invention

The present invention relates to a well plate and a method of using the same, and more specifically to a well plate and a method of using the same, which can improve the reduction in visibility due to the meniscus effect generated at the time of observing the well plate, for example, with a microscope or an imager device, and which enable observation of the circumferential edge of the bottom surface part of a well with sufficient brightness.

### (2) Description of Related Art

A well plate is an experimental/inspection instrument including a plate in which many recesses (holes or wells) are aligned, and is actively used in biochemical analysis, clinical inspection and the like. Specifically, a culture fluid, medium or the like is injected into each of the wells, and the well plate is used at the time of observing or measuring the cultured cells or the like. In recent years, there are also performed operations of picking up an image by an imaging device such as a CCD (Charge Coupled Device) camera, converting the image into data, and applying various image processing techniques to the image data for use in observation or analysis.

In such a well plate, for example, when imaging is conducted by irradiating each of the wells with illumination light from the upper side of the well plate and receiving the light transmitted through the bottom surface part of the well, the illumination light is refracted due to the meniscus effect of the liquid level of the liquid injected into the well, resulting in the occurrence of the problem that the circumferential edge of the bottom surface part of the well becomes dark in the captured image.

In response to such a problem, for example, JP H05-181068 A discloses that a transparent flat plate is floated on a liquid injected into each of wells to flatten the meniscus which can be generated by the solution. However, floating a flat plate on each of many wells which are provided in the well plate significantly reduces the operability.

JP 2012-147739 A discloses that the use of an objective lens of observation optical system having a numerical aperture (NA) enough to receive the light flux transmitted through a well plate can realize an optical system that enables simultaneous observation of the entire surface of a culture region which is a bottom surface of the well plate, even when the illumination light which has arrived at the outer peripheral part of a concave part in the well plate is further refracted radially from the center of the well plate due to the meniscus effect that forms the liquid level into a concave surface by the side wall of the well plate, and that can avoid the occurrence of a shadow near the well surfaces of the holes of the well plate. However, a lens having a high numerical aperture (NA) is expensive in production cost and has a shallow depth of field, and thus the entire object cannot, disadvantageously, be included within the focusing range when the steric structure of a sample is observed.

A well plate comprising the features of the preamble of claim 1 is known from WO 2014/107811 A1. Further prior art is disclosed in the documents US 9 360 433 B1, JP 2004 340759 A, US 2008/020455 A1, JP 2012 127964 A, US 6 051 191 A and WO 2003/036265 A2.

### BRIEF SUMMARY OF THE INVENTION

The present invention has been made in light of the aforementioned problem, and an object thereof is to provide a well plate and a method of using the same, which can improve the reduction in visibility due to the meniscus effect of a liquid injected into a well, and which enable observation of the circumferential edge of the bottom surface part of the well with sufficient brightness.

The object is achieved by the features of the independent claims. Further preferred embodiments of the invention are defined by the dependent claims. Aspects of the present invention are set out below.

A well plate according to an aspect is a well plate including a plate and a well which is opened in an upper surface of the plate, wherein the well includes a flat bottom surface part and a circumferential wall part rising upward from the circumferential edge of the bottom surface part, the circumferential wall part has a stepped part in the circumferential direction at an arbitrary height position, an upper circumferential wall part, which is located above the stepped part in the circumferential wall part, is larger in a cross sectional area than a lower circumferential wall part located below, and the stepped part indicates the lower limit of the liquid level height of a liquid sample contained in the well.

According to the aforementioned configuration, the well includes a stepped part in the circumferential wall part thereof, and the upper circumferential wall part which is located above the stepped part is larger in a cross sectional area than the lower circumferential wall part located below. The stepped part indicates the lower limit of the liquid level height of a liquid sample contained in the well. The liquid sample is injected into the well so that the liquid level arrives at the upper circumferential wall part which is located above the stepped part.

On the other hand, the liquid sample injected into the well wets the circumferential wall part due to the interfacial tension of the liquid sample, with the result that the liquid level becomes, for example, a concave curved surface due to the meniscus effect. However, when the well is observed from the bottom surface part of the well, the circumferential edge part which has been deformed into a curved surface since the liquid sample wets the circumferential wall part, can be blocked by the stepped part. As a result, the circumferential edge of the bottom surface part of the well to be observed actually can be brightened, and the visibility can be improved. Thus, the necessity for use of an expensive optical device or image processing device for the purpose of improving the visibility due to the meniscus effect is eliminated, thereby making it possible to observe and analyze the liquid sample contained in the well by means of a simple imaging device or the like with high accuracy.

The "liquid" means states including, in addition to a solution state, states having fluidity such as gels, suspensions and pastes. The "liquid sample" means a sample in such a fluid state, and includes not only liquid samples which are objects to be observed or measured themselves, but also liquids for culturing or protecting the object to be observed or measured, such as media for use in cell culture. Also, the "cross sectional area" means a sectional area of a surface vertical to the depth direction of the well. For example, when the liquid sample which is contained in the wells has a concave surface due to the meniscus effect, the "liquid level" means the lower surface thereof, and the "liquid level height" means a height from the bottom surface part of the well to the lower surface.

In the above configuration, the stepped part is preferably provided at a height position such that the volume of the lower circumferential wall part is 1/2 or less relative to the volume of the well. Even when the amount of the liquid sample to be injected into the well is minor, this makes it possible to improve the reduction in visibility due to the meniscus effect and also to improve the degree of freedom of the liquid amount.

Also, according to the invention, the stepped part has a light blocking property of blocking light having a wavelength within a visible light range. This makes it possible to be blocked the light incident near the circumferential wall part of the well, in the liquid level of the liquid sample deformed into a curved surface due to the meniscus effect, can surely by the stepped part. As a result, the circumferential edge of the bottom surface part of the well can be observed in a further bright state, and the visibility can further be improved. In the meantime, the "light within a visible light range" means light within a wavelength region of 360 nm to 780 nm.

A method of using a well plate according to an aspect is a method of using a well plate including a plate and a well which is opened in an upper surface of the plate, wherein the well includes a flat bottom surface part and a circumferential wall part rising upward from the circumferential edge of the bottom surface part, the circumferential wall part has a stepped part in the circumferential direction at an arbitrary height position, an upper circumferential wall part, which is located above the stepped part in the circumferential wall part, is larger in a cross sectional area than a lower circumferential wall part located below, and the stepped part indicates the lower limit of the liquid level height of a liquid sample contained in the well, the method comprising injecting the liquid sample into the well so that the liquid level is located above the stepped part which indicates the lower limit of the liquid level height of the liquid sample.

According to the invention, the stepped part indicates the lower limit of the liquid level height of a liquid sample contained in the well, and the liquid sample is injected into the well so that the liquid level is located above the stepped part. When the bottom surface part of the well is observed from the lower side of the well plate, this makes it possible to be blocked the circumferential edge part which has been deformed into a curved surface since the liquid sample wets the circumferential wall part by the stepped part. The circumferential edge of the bottom surface part of the well can be brightened as compared with the case where conventional well plates are used. In brief, the aforementioned configuration can improve the visibility, and the liquid sample can be observed and analyzed with high accuracy without using an expensive optical device or image processing device.

In the above configuration, it is preferable to irradiate the wells in which the liquid sample has been injected with light from the upper side of the well plate, and to image the liquid sample in the bottom surface part of the well from the lower side of the well plate. When the liquid sample is imaged from the upper side of the well plate, there are cases where the captured image is distorted due to the lens effect of the liquid level deformed into a curved surface due to the meniscus effect. Also, when the liquid sample is a culture fluid for cells, the culture fluid is normally kept warm at about 36°C. In such a case, when the opened well is closed by a lid or the like for the purpose of preventing the contamination of dust or the like, the lid or the like sometimes become cloudy. Therefore, when the liquid sample is imaged from the upper side of the well plate, there is raised the problem of a non-sharp captured image due to the cloudiness of the lid or the like. However, according to the above configuration, the well into which the liquid sample has been injected is irradiated with light from the upper side of the well plate, and the liquid sample in the bottom surface part of the well is imaged from the lower side of the well plate. So, it is possible to prevent distortion and to obtain a sharp captured image.

According to the present invention, the well plate has a stepped part in the circumferential direction in the circumferential wall part of the well, and the upper circumferential wall part which is located above the stepped part is larger in a cross sectional area than the lower circumferential wall part located below. Since the stepped part indicates the lower limit of the liquid level height of a liquid sample contained in the well, the liquid sample is injected into the well so that the liquid level arrives at the upper circumferential wall part which is located above the stepped part.

Once the liquid sample has been injected into the well so that the liquid level arrives at the upper circumferential wall part which is located above the stepped part, when the well is observed, for example, from the bottom surface part of the well, the circumferential edge of the liquid level deformed into a curved surface due to the meniscus effect can be blocked by the stepped part. Therefore, it is possible to observe the circumferential edge of the bottom surface part of the well in a bright state, and to improve the visibility. Also, the visibility can be improved without using an expensive optical device or image processing device, thereby making it possible to avoid complication of the device and to reduce the cost.

### BRIEF DESCRIPTION OF THE DRAWINGS

Fig. 1 is a plan view schematically showing a well plate according to one embodiment of the present invention;
Fig. 2A is an explanatory view showing a well formed in the well plate, which is a plan view showing the well when viewed from the upper surface of a plate;
Fig. 2B is a schematic sectional view of the well formed in the well plate;
Fig. 3 is a partially enlarged view showing a stepped part formed in the circumferential wall part of the well;
Fig. 4 is a schematic view showing a state where the well plate is imaged by an imaging device;
Fig. 5 is a side view showing a state where a liquid sample has been injected into the well plate;
Fig. 6 is a captured image view of a culture fluid injected into a well formed in a well plate according to Example 1 of the present invention;
Fig. 7 is a captured image view of a culture fluid injected into a well formed in a well plate according to Example 2 of the present invention;
Fig. 8 is a captured image view of a culture fluid injected into a well formed in a well plate according to Comparative Example 1 of the present invention;
Fig. 9 is a captured image view of a culture fluid injected into a well formed in a well plate according to Comparative Example 2 of the present invention; and
Fig. 10 is a captured image view of a culture fluid injected into a well formed in a well plate according to Comparative Example 3 of the present invention.

### DETAILED DESCRIPTION OF THE INVENTION

### (Well plate)

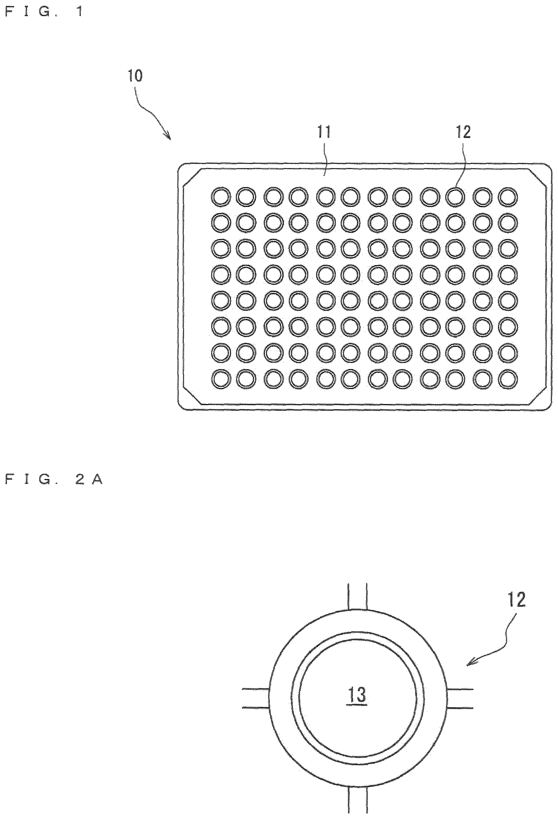

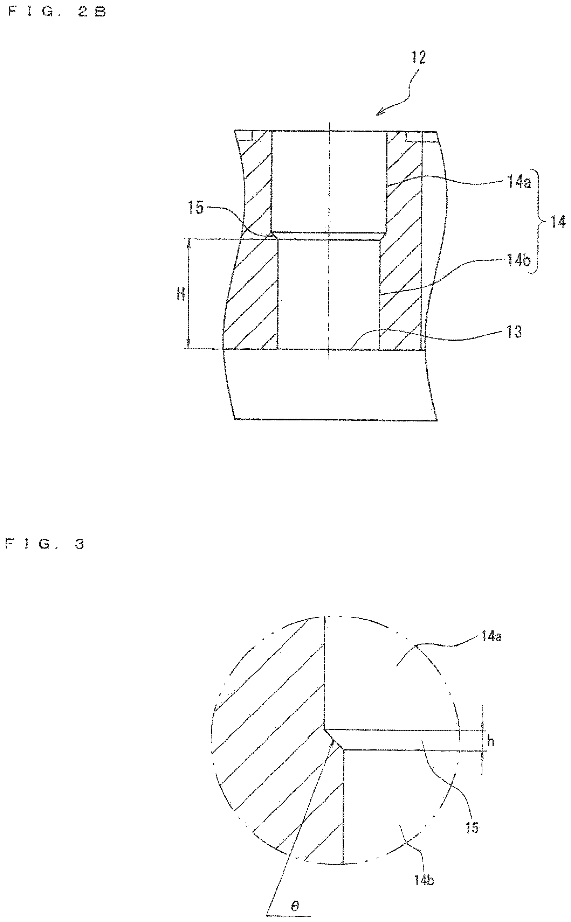

A well plate according to this embodiment will be described below based on Figs. 1 to 4. Fig. 1 is a plan view schematically showing a well plate according to this embodiment. Fig. 2A is an explanatory view showing a well formed in the well plate, which is a plan view showing the well when viewed from the upper surface of a plate. Fig. 2B is a schematic sectional view of the well formed in the well plate. Fig. 3 is a partially enlarged view showing a stepped part formed in the circumferential wall part of the well.

As shown in Fig. 1, a well plate 10 is configured so that a plurality of wells 12 are arranged in the upper surface of a plate 11. The plate 11 has light transmittance, but there can also be used plates to which light blocking property is imparted, for example, by coloring the plates black, except the bottom surface parts of the wells 12 (the details thereof will be described later). Here, the "light transmittance" means transmittance to light within a visible light region (360 nm to 780 nm). The entire shape of the plate 11 is rectangular, but may be any other shape in the present disclosure.

The material constituting the plate 11 is not particularly limited, but, for example, materials which do not affect the observation, detection and measurement of a liquid sample and have excellent surface treatment properties and moldability are preferably used. Specifically, examples of the material include polystyrene-based resins such as polystyrene and acrylonitrile-butadiene-styrene-based resin; polyolefin-based or cyclic polyolefin-based resins such as polypropylene resin, polyethylene resin and ethylene-propylene copolymer; polycarbonate resin; polyethylene terephthalate resin; methacrylic resins such as polymethylmethacrylate resin; vinyl chloride resin; polybutylene terephthalate resin; polyarylate resin; polysulfone resin; polyethersulfone resin; polyetheretherketone resin; polyetherimide resin; fluorine-based resins such as polytetrafluoroethylene; polymethylpentene resin; acrylic resins such as polyacrylonitrile; and cellulosic resins such as propionate resin. Among these resins, polyethylene terephthalate resins, polystyrene-based resins and polycarbonate resins are preferred from the viewpoint of low cytotoxicity.

The dimensions of the plate 11 can vary depending on the intended use. For example, in the case of the well plate 10 shown in Fig. 1, the device dimensions (length L, height H and width W) can be defined as L= approximately 82 to 88 mm, H= approximately 12 to 18 mm, and W= approximately 124 to 130 mm.

The well 12 functions as a containing part for containing and holding the liquid sample as shown in Figs. 2A and 2B. In this embodiment, the total number of the wells 12 is 8×12= 96 in total, but can appropriately be changed depending on the intended use. Specifically, the number of the wells preferably ranges from 4 to 1536, more preferably from 96 to 1536. Also, the width dimension (aperture dimension) and depth dimension of the respective wells 12 are not particularly limited so long as the wells can be accommodated in the plate 11, and can appropriately be determined depending, for example, on the dimensions of the plate 11. In this embodiment, the width dimension w can be defined within the range of from 1. 5 mm to 60 mm, and the depth dimension d can be defined within the range of from 2 mm to 18 mm. It can be said that when the width dimension and depth dimension of the respective wells 12 are increased, the amount of the liquid necessary for the reaction and the like can also be increased, which is preferred in many cases. However, an unnecessary liquid cost would be required when the amounts of the necessary ingredients exceed amounts necessary and sufficient for the reaction and the like.

The aperture of the well 12 is formed in a circular shape in a plan view. However, the present disclosure is not limited to the case of a circular shape, and for example, rectangular shapes and polygonal shapes may also be employed. The bottom surface part 13 of the well 12 is formed in a flat circular shape. The shape of the bottom surface part 13 is also not limited to the case of a circular shape, and can be, for example, a rectangular shape or the like in response to the aperture shape of the well 12. Also, the bottom surface part 13 must have transmittance to light within a visible light range. Thus, for example, the bottom surface part 13 can transmit the irradiated light from the upper side of the well 12, and enables imaging by means of an imaging device which will be described later.

The circumferential wall part 14 of the well 12 is provided so as to rise upward from the circumferential edge of the bottom surface part 13, and is provided with a stepped part 15 in the circumferential direction. More specifically, the part located below the stepped part 15 is a lower circumferential wall part 14b which is provided so as to rise upward from the circumferential edge of the bottom surface part 13. Also, the part located above the stepped part 15 is an upper circumferential wall part 14a which is provided so as to rise upward from the circumferential edge of the stepped part 15.

Also, the cross sectional area of the upper circumferential wall part 14a is configured to be larger than the cross sectional area of the lower circumferential wall part 14b. A sufficient size of the cross sectional area of the upper circumferential wall part 14a relative to the cross sectional area of the lower circumferential wall part 14b is such that the circumferential edge part of the liquid level of the liquid sample is blocked at least by the stepped part 15 when the well 12 is observed from the side of the bottom surface part 13. Thus, the circumferential edge part of the well 12 to be observed can be observed brightly, and the visibility can surely be improved.

The lower circumferential wall part 14b may rise almost vertically to the bottom surface part 13 or tapered toward the opening direction. In the case of the tapered lower circumferential wall part 14b, when the well plate 10 is manufactured through molding by means of a die, the molded product can easily be released from the die. The upper circumferential wall part 14a may also rise almost vertically to the stepped part 15 or tapered toward the opening direction. When the upper circumferential wall part 14a rises in a tapered manner, the molded product can easily be released from the die, as with the lower circumferential wall part 14b. It is noted that the taper angle is preferably determined within a range in which the influence on the observation screen due to the meniscus effect of the liquid sample is maximally suppressed.

The stepped part 15 indicates the lower limit of the liquid level height of a liquid sample contained in the well 12. Therefore, when the well plate 10 of this embodiment is used, the liquid sample must be injected up to a height position such that the liquid level is located above the stepped part 15 and, at least, arrives at the upper circumferential wall part 14a. For example, when the liquid sample forms a concave meniscus, the "liquid level" means the lower surface of the meniscus.

The height position H of the stepped part 15 in the circumferential wall part 14 is not particularly limited, but is preferably determined so that the volume of the lower circumferential wall part 14b is 1/2 or less relative to the volume of the well 12. Thus, even when the amount of the liquid sample to be injected into the well 12 is minor, the reduction in visibility due to the meniscus effect can be improved. Also, the liquid amount of the liquid sample can appropriately be determined within a range in which the liquid level height is not lower than the height of the stepped part 15. The lower limit of the height H of the stepped part 15 is not particularly limited. However, for example, when a culture fluid is used as the liquid sample, the culture fluid is preferably held at a level such that cell culture would not be inhibited in the bottom surface part 13. The "height position H of the stepped part 15" means a distance from the bottom surface part 13 to the boundary portion between the bottom surface part 13 and the stepped part 15, in other words, can be said to mean the height of the lower circumferential wall part 14b.

The inclination angle θ of the stepped part 15 is not particularly limited so long as it falls within the range of 0° or more and less than 90° (see Fig. 3). However, for example, when a culture fluid is used as the liquid sample and cell culture is carried out in the culture fluid, the inclination angle θ is preferably within a range such that the cultured cells (spheroidal colonies) do not remain at the stepped part 15, and can be precipitated in the bottom surface part 13 by their own weight. Thus, the cells can be prevented from remaining and being cultured at the stepped part 15. Also, the inclination angle θ of the stepped part 15 is preferably consistent over the whole circumference of the circumferential wall part 14. It is noted that the numerical range for the inclination angle θ is more preferably 30° or more and 75° or less, further preferably 40° or more and 50° or less. The "inclination angle θ" means an angle formed between a horizontal surface and an inclined surface of the stepped part 15 when the well plate 10 is placed on the horizontal surface.

The height h of the stepped part 15 is not particularly limited, and is preferably determined, depending on the values of the cross sectional area of the upper circumferential wall part 14a and inclination angle θ, so that the circumferential edge part of the liquid level of the liquid sample is blocked at least by the stepped part 15.

Also, the light blocking property is imparted to the stepped part 15 to block light having a wavelength within a visible light range. Thus, the circumferential edge in the bottom surface part 13 of the well 12 can be brightened, and the visibility can further be improved. Specific examples of the method of imparting the light blocking property include a method of coloring the stepped part 15 black. Here, the "light blocking property" means that, when the stepped part 15 is observed from the side of the bottom surface part 13, the average total light transmittance within the wavelength range of visible light (380 to 780 nm) is attenuated to 70% or less, preferably 30% or less, further preferably 10% or less.

Hydrophilization treatment such as plasma treatment, corona treatment or microwave treatment is applied to the bottom surface part 13 of the well 12 for promoting physisorption and chemisorption of an analyte ingredient. On the other hand, water repellent treatment such as fluorination is applied in the circumferential wall part 14 in order to prevent the remaining of the cells or the like at the stepped part 15.

Examples of the liquid sample include reagents and culture fluids for cells. In the case of culture fluids, biological samples such as cells and bacteria cultured under predetermined culturing conditions are used as objects for observation, biochemical analysis and imaging.

The method of manufacturing the well plate 10 is not particularly limited. For example, when the well plate 10 is made of a resin material, the well plate 10 can easily be prepared, for example, by injection molding, blow molding or injection blow molding or by using a 3D printer. Also, when the well plate 10 is made of glass, the well plate 10 can be prepared by molding through a use of a die or machining.

### (Method of using well plate)

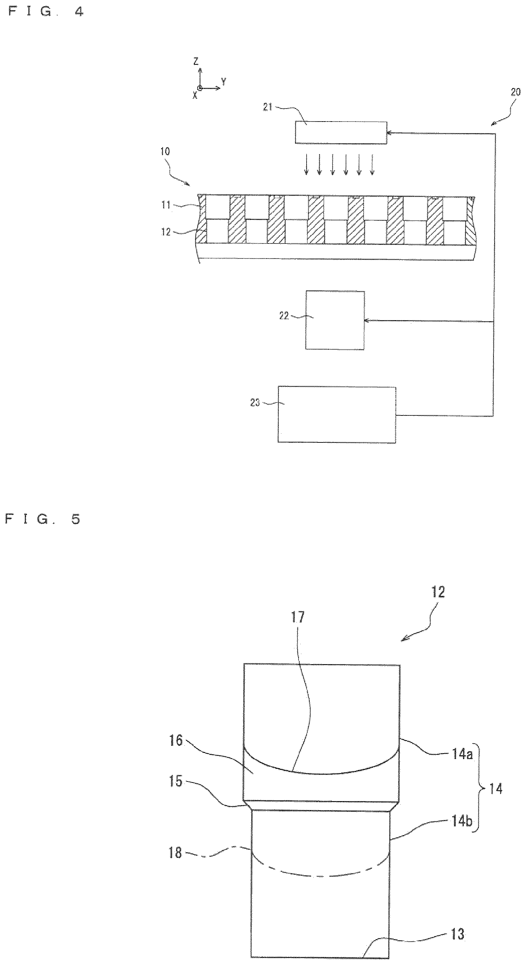

A method of using the well plate 10 of this embodiment will be described below based on Figs. 4 and 5. Fig. 4 is a schematic view showing a state where the well plate 10 is imaged by an imaging device. Fig. 5 is a side view showing a state where a liquid sample has been injected into the well plate 10. The XY plane represents a horizontal surface in Fig. 4, and the Z axis represents a vertical axis.

Firstly, an imaging device 20 used in this embodiment will be described. The imaging device 20 includes, as shown in Fig. 4, a holder which holds the well plate 10 in an approximately horizontal posture (not shown), an illuminating part 21 arranged above the well plate 10, an imaging part 22 arranged below the well plate 10, and a control part 23 having a CPU which controls the operations of these parts.

The illuminating part 21 irradiates the well plate 10 held by the holder for vertical illumination with diffused light (ex. white light) from the upper side of the well plate 10. The form of the light source of the illuminating part 21 is not particularly limited, and, for example, a point light source, a surface light source and the like can be employed. More specifically, a white LED (Light Emitting Diode) light source and the like can be used. Also, the illuminating part 21 may be provided with a diffusion plate for diffusing the irradiated light from the light source to form a surface light source. The irradiation by the illuminating part 21 is carried out while the illuminating part 21 is moved on the XY plane by the control part 23 to be arranged on an arbitrary well 12 as the object for irradiation.

The imaging part 22 is arranged below the well plate 10, and the imaging part 22 is focused on the bottom surface part 13 of the well 12 in which the biological sample or the like to be imaged is present. The focus of the imaging part 22 can be adjusted by the control part 23 vertically moving the imaging part 22 in the Z axis. The imaging part 22 can be moved on XY plane together with the illuminating part 21 under the control of the control part 23. Thus, when an arbitrary well 12 is imaged, the center of the well 12 can be positioned on the central axis of the illuminating part 21 and imaging part 22. As a result, an illumination light path and an imaging light path are made consistent, and the illumination conditions are made constant, whereby the imaging conditions can be maintained well. Specific examples of the imaging device 20 include an inverted microscope.

Here, the liquid sample 16 is injected into the well 12 formed in the well plate 10 in such a manner as shown in Fig. 5. Specifically, as shown in this figure, the liquid sample 16 is injected, at least, to a level such that the liquid level 17 of the liquid sample arrives at the upper circumferential wall part 14a. At this time, the liquid level 17 wets the circumferential wall part due to the interfacial tension of the liquid sample, and thus becomes a concave curved surface to form a meniscus.

The imaging of the liquid sample 16 is performed by delivering the irradiated light from the upper side of the well 12 by the illuminating part 21 of the imaging device 20 and receiving, in the imaging part 22, the light transmitted through the liquid sample 16 in the well 12 and the bottom surface part 13. At this time, on the liquid level 17 formed into a concave surface due to the meniscus effect, the irradiated light which has arrived at the circumferential edge near the upper circumferential wall part 14a further travels radially from the center of the well 12 by refraction. However, the circumferential edge of the liquid level 17, when observed from the bottom surface part 13 of the well 12, is blocked by the stepped part 15. Therefore, the imaging part 22 can image the liquid sample in a state where the circumferential edge of the bottom surface part 13 is brightened.

When the liquid level of the liquid sample 16 injected into the well 12 is located at a position lower than the height position of the stepped part 15 (indicated as a liquid level 18 in Fig. 5), the circumferential edge of the liquid level near the upper circumferential wall part 14a cannot be blocked by the stepped part 15. Therefore, the liquid sample is imaged by the imaging part 22 in a state where the circumferential edge of the bottom surface part 13 is dark.

Also, in this embodiment, a method including arranging the illuminating part 21 below the well plate 10 and arranging the imaging part 22 above the well plate 10 to image the liquid sample 16 is conceivable, but causes the following disadvantage. Specifically, while the imaging part 22 images the liquid sample focusing on the bottom surface part 13 of the well 12, the captured image is sometimes distorted due to the lens effect by the concave meniscus of the liquid level of the liquid sample 16. Therefore, the analysis accuracy is sometime lowered as compared with the case where the liquid sample is imaged from the lower side of the well plate 10. Also, the aperture portion of the well 12 is closed by a lid, a plate seal or the like which can be fitted to the well 12 form the viewpoint of preventing the contamination of dust or the like. However, when the liquid sample 16 is, for example, a culture fluid for cells and is kept warm at about 36°C, the lid or the like sometimes become cloudy. In that case, the image captured by the imaging part 22 is disadvantageously non-sharp. In view of the above, in the well plate 10 of this embodiment, the liquid sample injected into the well 12 is imaged preferably from the lower side through vertical irradiation from the upper side of the well plate 10.

Hereinafter, examples suitable for this disclosure will be illustrated in detail. However, the scope of the materials used and the amounts thereof used according to this disclosure, are not limited to those which are described in the following examples, unless otherwise specified.

### (Example 1)

In this example, a well plate made of an acrylic resin and having the following specification was used. It is noted that a well whose upper circumferential wall part and lower circumferential wall part rise respectively almost vertically to the bottom surface part was used.
Inner diameter of upper circumferential wall part: 5.6 mm
Inner diameter of lower circumferential wall part: 5 mm
Inclination angle of stepped part: 0°
Volume of well: 250 µl
Volume of lower circumferential wall part: 50.04 µl
Height position of stepped part: 2.55 mm from bottom surface part
Depth of well (distance from bottom surface part to aperture): 10.8 mm

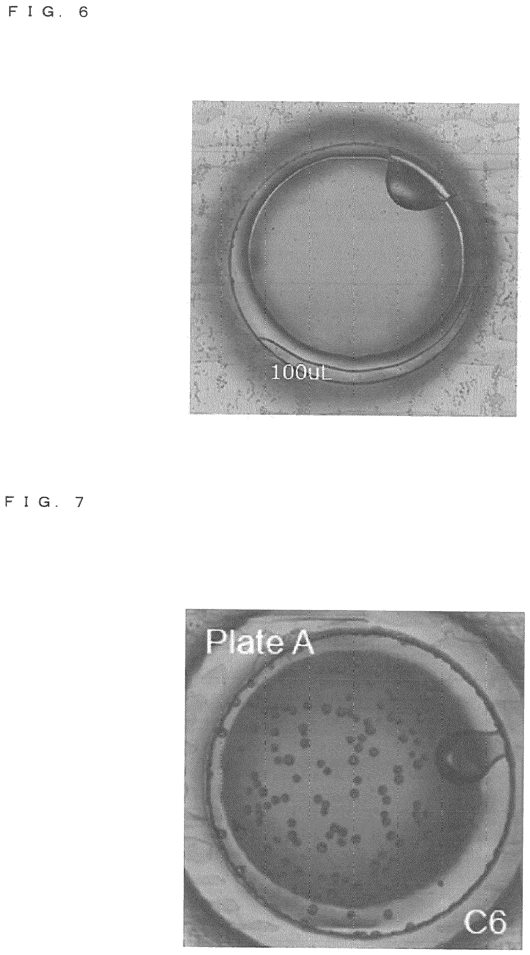

A culture fluid DMEM (Dulbecco's Modified Eagle's Medium) (100 µl) was dropped into the well of the well plate to image the well bottom surface part with an inverted microscope. The result is shown in Fig. 6.

### (Example 2)

In this example, a well plate having the following specification was used. The well bottom surface part was imaged with an inverted microscope in a similar manner as in Example 1 except the well plate used. The result is shown in Fig. 7.
Inner diameter of upper circumferential wall part: 5.6 mm
Inner diameter of lower circumferential wall part: 5 mm
Inclination angle of stepped part: 45°
Volume of well: 250 µl
Volume of lower circumferential wall part: 50.04 µl
Height position of stepped part: 2.55 mm from bottom surface part
Depth of well (distance from bottom surface part to aperture): 10.8 mm

### (Comparative Example 1)

In this comparative example, used was a well plate made of a polystyrene resin, including a well having a circumferential wall part in which no stepped part was provided, and having the following specification.
Inner diameter of circumferential wall part: 5.6 mm
Volume of well: 266 µl
Depth of well (distance from bottom surface part to aperture): 10.8 mm

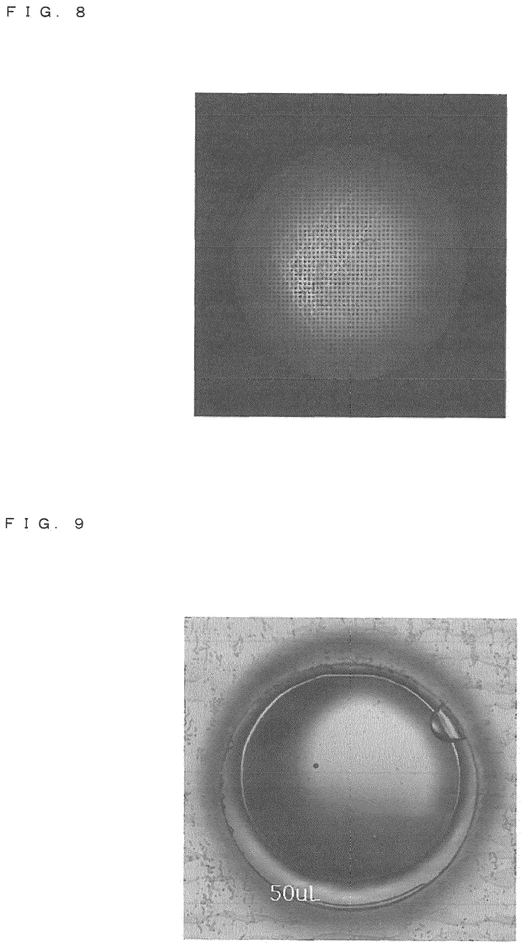

DMEM (100 µl) was dropped into the well of the well plate to image the well bottom surface part with the inverted microscope. The result is shown in Fig. 8.

### (Comparative Example 2)

In this comparative example, the amount of DMEM to be dropped was changed to 50 µl. The well bottom surface part was imaged with the inverted microscope in a similar manner as in the Example 1 except the amount. The result is shown in Fig. 9.

### (Comparative Example 3)

In this comparative example, used was a well plate including a well having a circumferential wall part in which no stepped part was provided, and having the following specification.
Inner diameter of circumferential wall part: 5.6 mm
Volume of well: 266 µl
Depth of well (distance from bottom surface part to aperture): 10.8 mm

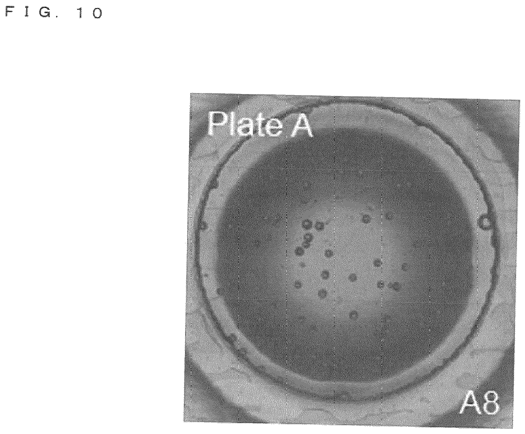

DMEM (100 ul) was dropped into the well of the well plate to image the bottom surface part of the well with the inverted microscope. The result is shown in Fig. 10.

### (Result)

As is evident from Figs. 6 and 7, it was confirmed that imaging could be carried out also at the circumferential edge of the well bottom surface part in a bright state in Examples 1 and 2, and that the visibility was improved. On the other hand, in Comparative Examples 1 and 3 using a conventional well plate, darkness was generated over the entire imaged range due to the influences of the meniscus, as shown in Figs. 8 and 10, and thus performing sufficient observation and analysis were difficult. In Comparative Example 2 wherein the well plate similar to that in Example 1 was used, but the amount of DMEM dropped was changed to 50 ul, the circumferential edge of the well bottom surface part was imaged in a dark state due to the influences of the meniscus, as shown in Fig. 9.

## Claims

1. A well plate (10) comprising a plate (11) and a well (12) which is opened in an upper surface of the plate (11) and which is configured to contain a liquid sample, wherein
the well (10) includes a flat bottom surface part (13) and a circumferential wall part (14) rising upward from the circumferential edge of the bottom surface part (13),
the circumferential wall part (14) has a stepped part (15) in the circumferential direction at an arbitrary height position,
an upper circumferential wall part (14a), which is located above the stepped part (15) in the circumferential wall part (14), is larger in a cross sectional area than a lower circumferential wall part (14b) located below,
the stepped part (15) is arranged as a lower limit of the liquid level height of the liquid sample (16) contained in the well (12),
the upper circumferential wall part (14a) is an upper circumferential wall part (14a) subjected to water repellent treatment,
the lower circumferential wall part (14b) is a lower circumferential wall part (14b) subjected to water repellant treatment,
and the stepped part (15) is a stepped part (15) subjected to water repellant treatment and has light blocking property of blocking light having a wavelenght within a visible light range, **characterized in that**
the bottom surface part (13) is a bottom surface part (13) subjected to hydrophilization treatment.

2. The well plate (10) according to claim 1, **characterized in that** the stepped part (15) is provided at a height position such that the volume of the lower circumferential wall part (14b) is 1/2 or less relative to the volume of the well (12), in the circumferential wall part (14).

3. The well plate (10) according to any one of claims 1 or 2, **characterized in that** the lower circumferential wall part (14b) rises vertically with respect to the bottom surface part (13) or in a tapered manner toward the opening direction.

4. The well plate (10) according to any one of claims 1 to 3, **characterized in that** the upper circumferential wall part (14a) rises vertically with respect to the bottom surface part (13) or in a tapered manner from the stepped part (15) toward the opening direction.

5. The well plate (10) according to any one of claims 1 or 2, **characterized in that** an inclination angle θ formed between an inclined surface of the stepped part (15) and a horizontal surface is 0° or more and less than 90°.

6. A method of using a well plate (10) comprising a plate (11) and a well (12) which is opened in an upper surface of the plate (11), wherein
the well (12) includes a flat bottom surface part (13) and a circumferential wall part (14) rising upward from the circumferential edge of the bottom surface part (13),
the circumferential wall part (14) has a stepped part (15) in the circumferential direction at an arbitrary height position,
an upper circumferential wall part (14a), which is located above the stepped part (15) in the circumferential wall part (14), is larger in a cross sectional area than a lower circumferential wall part (14b) located below,
the method comprising injecting a liquid sample (16) into the well (12) so that the liquid level is located above the stepped part (15) which indicates a lower limit of a liquid level height of the liquid sample (16) injected and contained in the well (12),
the upper circumferential wall part (14a) is an upper circumferential wall part (14a) subjected to water repellent treatment,
the lower circumferential wall part (14b) is a lower circumferential wall part (14b) subjected to water repellant treatment,
and the stepped part (15) is a stepped part (15) subjected to water repellant treatment and has light blocking property of blocking light having a wavelenght within a visible light range, **characterized in that**
the bottom surface part (13) is a bottom surface part (13) subjected to hydrophilization treatment.

7. The method of using a well plate (10) according to claim 6, comprising irradiating the well (12) in which the liquid sample (16) has been injected with light from the upper side of the well plate (10), and imaging the liquid sample (16) in the bottom surface part (13) of the well (12) from the lower side of the well plate (10).

8. The method of using a well plate (10) according to claim 6 or 7, **characterized in that** the stepped part (15) is provided at a height position such that the volume of the lower circumferential wall part (14b) is 1/2 or less relative to the volume of the well (12).

9. The method of using a well plate (10) according to any one of claims 6 to 8, **characterized in that** the lower circumferential wall part (14b) rises vertically with respect to the bottom surface part (13) or in a tapered manner toward the opening direction.

10. The method of using a well plate (10) according to any one of claims 6 to 9, **characterized in that** the upper circumferential wall part (14a) rises vertically with respect to the bottom surface part (13) or in a tapered manner from the stepped part (15) toward the opening direction.

11. The method of using a well plate (10) according to any one of claims 6 to 8, **characterized in that** an inclination angle θ formed between an inclined surface of the stepped part (15) and a horizontal surface is 0° or more and less than 90°.

## Patentansprüche

1. Vertiefungsplatte (10), umfassend eine Platte (11) und eine Vertiefung (12), die in einer oberen Oberfläche der Platte (11) geöffnet ist und die zur Aufnahme einer flüssigen Probe ausgebildet ist, wobei
die Vertiefung (10) einen flachen Bodenoberflächenteil (13) und einen umlaufenden Wandteil (14) aufweist, der sich von der Umfangskante des Bodenoberflächenteils (13) nach oben erhebt,
der umlaufende Wandteil (14) einen in Umfangsrichtung abgestuften Teil (15) an einer beliebigen Höhenposition aufweist,
ein oberer umlaufender Wandteil (14a), der sich oberhalb des abgestuften Teils (15) im umlaufenden Wandteil (14) befindet, in einer Querschnittsfläche größer ist als ein unterer umlaufender Wandteil (14b), der sich unterhalb befindet,
der abgestufte Teil (15) als untere Grenze der Flüssigkeitsspiegelhöhe der in der Vertiefung (12) enthaltenen flüssigen Probe (16) angeordnet ist,
der obere umlaufende Wandteil (14a) ist ein oberer umlaufender Wandteil (14a), der einer wasserabweisenden Behandlung unterzogen wurde,
der untere umlaufende Wandteil (14b) ist ein unterer umlaufender Wandteil (14b), der einer wasserabweisenden Behandlung unterzogen wurde,
und das abgestufte Teil (15) ein abgestuftes Teil (15) ist, das einer wasserabweisenden Behandlung unterzogen wurde und die lichtblockierende Eigenschaft hat, Licht mit einer Wellenlänge innerhalb eines sichtbaren Lichtbereichs zu blockieren,
**dadurch gekennzeichnet, dass**
der Bodenoberflächenteil (13) ein Bodenoberflächenteil (13) ist, der einer Hydrophilisierungsbehandlung unterzogen wurde

2. Vertiefungsplatte (10) nach Anspruch 1, **dadurch gekennzeichnet, dass** der abgestufte Teil (15) in einer solchen Höhenposition in dem umlaufenden Wandteil (14) vorgesehen ist, dass das Volumen des unteren umlaufenden Wandteils (14b) 1/2 oder weniger relativ zum Volumen der Vertiefung (12) beträgt.

3. Vertiefungsplatte (10) nach einem der Ansprüche 1 oder 2, **dadurch gekennzeichnet, dass** der untere umlaufende Wandteil (14b) vertikal in Bezug auf den Bodenoberflächenteil (13) oder konisch zur Öffnungsrichtung hin ansteigt.

4. Vertiefungsplatte (10) nach einem der Ansprüche 1 bis 3, **dadurch gekennzeichnet, dass** der obere umlaufende Wandteil (14a) vertikal in Bezug auf den Bodenoberflächenteil (13) oder konisch von dem abgestuften Teil (15) in Öffnungsrichtung ansteigt.

5. Vertiefungsplatte (10) nach einem der Ansprüche 1 oder 2, **dadurch gekennzeichnet, dass** ein Neigungswinkel θ, der zwischen einer geneigten Fläche des abgestuften Teils (15) und einer horizontalen Fläche gebildet wird, 0° oder mehr und weniger als 90°beträgt.

6. Verfahren zur Verwendung einer Vertiefungsplatte (10) mit einer Platte (11) und einer Vertiefung (12), die in einer oberen Fläche der Platte (11) geöffnet ist, wobei
die Vertiefung (12) einen flachen Bodenoberflächenteil (13) und einen umlaufenden Wandteil (14) aufweist, der sich von der Umfangskante des Bodenoberflächenteils (13) nach oben erhebt,
der umlaufende Wandteil (14) einen in Umfangsrichtung abgestuften Teil (15) an einer beliebigen Höhenposition aufweist,
ein oberer umlaufender Wandteil (14a), der sich oberhalb des abgestuften Teils (15) im umlaufenden Wandteil (14) befindet, in einer Querschnittsfläche größer ist als ein unterer umlaufender Wandteil (14b), der sich unterhalb befindet,
wobei das Verfahren das Einspritzen einer flüssigen Probe (16) in die Vertiefung (12) umfasst, so dass sich der Flüssigkeitspegel über dem abgestuften Teil (15) befindet, der eine untere Grenze einer Flüssigkeitspegelhöhe der eingespritzten und in der Vertiefung (12) enthaltenen flüssigen Probe (16) anzeigt,
der obere umlaufende Wandteil (14a) ist ein oberer umlaufender Wandteil (14a), der einer wasserabweisenden Behandlung unterzogen wurde,
der untere umlaufende Wandteil (14b) ist ein unterer umlaufender Wandteil (14b), der einer wasserabweisenden Behandlung unterzogen wurde,
und das abgestufte Teil (15) ein abgestuftes Teil (15) ist, das einer wasserabweisenden Behandlung unterzogen wurde und die lichtblockierende Eigenschaft hat, Licht mit einer Wellenlänge innerhalb eines sichtbaren Lichtbereichs zu blockieren,
**dadurch gekennzeichnet, dass**
der Bodenoberflächenteil (13) ein Bodenoberflächenteil (13) ist, der einer Hydrophilisierungsbehandlung unterzogen wurde.

7. Verfahren zur Verwendung einer Vertiefungsplatte (10) nach Anspruch 6, umfassend das Bestrahlen der Vertiefung (12), in die die flüssige Probe (16) injiziert worden ist, mit Licht von der Oberseite der Vertiefungsplatte (10) und das Abbilden der flüssigen Probe (16) im Bodenoberflächenteil (13) der Vertiefung (12) von der Unterseite der Vertiefungsplatte (10).

8. Verfahren zur Verwendung einer Vertiefungsplatte (10) nach Anspruch 6 oder 7, **dadurch gekennzeichnet, dass** der abgestufte Teil (15) in einer solchen Höhenposition vorgesehen ist, dass das Volumen des unteren umlaufenden Wandteils (14b) 1/2 oder weniger relativ zum Volumen der Vertiefung (12) beträgt.

9. Verfahren zur Verwendung einer Vertiefungsplatte (10) nach einem der Ansprüche 6 bis 8, **dadurch gekennzeichnet, dass** der untere umlaufende Wandteil (14b) in Bezug auf den Bodenoberflächenteil (13) vertikal oder konisch zur Öffnungsrichtung hin ansteigt.

10. Verfahren zur Verwendung einer Bohrlochplatte (10) nach einem der Ansprüche 6 bis 9, **dadurch gekennzeichnet, dass** der obere umlaufende Wandteil (14a) vertikal in Bezug auf den Bodenoberflächenteil (13) oder konisch von dem abgestuften Teil (15) in Öffnungsrichtung ansteigt.

11. Verfahren zur Verwendung einer Bohrlochplatte (10) nach einem der Ansprüche 6 bis 8, **dadurch gekennzeichnet, dass** ein Neigungswinkel θ, der zwischen einer geneigten Fläche des abgestuften Teils (15) und einer horizontalen Fläche gebildet wird, 0° oder mehr und weniger als 90°beträgt.

## Revendications

1. Plaque à puits (10) comprenant une plaque (11) et un puits (12) qui est ouvert dans une surface supérieure de la plaque (11) et qui est configuré pour contenir un échantillon de liquide, dans laquelle
le puits (10) inclut une partie de surface inférieure plate (13) et une partie de paroi circonférentielle (14) montant vers le haut depuis le bord circonférentiel de la partie de surface inférieure (13),
la partie de paroi circonférentielle (14) comporte une partie étagée (15) dans la direction circonférentielle en une position de hauteur arbitraire,
une partie de paroi circonférentielle supérieure (14a), qui est située au-dessus de la partie étagée (15) dans la partie de paroi circonférentielle (14), est plus grande en coupe transversale qu'une partie de paroi circonférentielle inférieure (14b) située au-dessous,
la partie étagée (15) est agencée en tant que limite inférieure de la hauteur de niveau de liquide de l'échantillon de liquide (16) contenu dans le puits (12),
la partie de paroi circonférentielle supérieure (14a) est une partie de paroi circonférentielle supérieure (14a) soumise à un traitement hydrofuge,
la partie de paroi circonférentielle inférieure (14b) est une partie de paroi circonférentielle inférieure (14b) soumise à un traitement hydrofuge,
et la partie étagée (15) est une partie étagée (15) soumise à un traitement hydrofuge et présente une propriété de blocage de lumière de blocage de lumière ayant une longueur d'onde dans une plage de lumière visible,
**caractérisée en ce que**
la partie de surface inférieure (13) est une partie de surface inférieure (13) soumise à un traitement d'hydrophilisation.

2. Plaque à puits (10) selon la revendication 1, **caractérisée en ce que** la partie étagée (15) se situe dans une position de hauteur de telle sorte que le volume de la partie de paroi circonférentielle inférieure (14b) fait la moitié ou moins par rapport au volume du puits (12), dans la partie de paroi circonférentielle (14).

3. Plaque à puits (10) selon l'une quelconque des revendications 1 ou 2, **caractérisée en ce que** la partie de paroi circonférentielle inférieure (14b) monte verticalement par rapport à la partie de surface inférieure (13) ou d'une manière rétrécie vers la direction d'ouverture.

4. Plaque à puits (10) selon l'une quelconque des revendications 1 à 3, **caractérisée en ce que** la partie de paroi circonférentielle supérieure (14a) monte verticalement par rapport à la partie de surface inférieure (13) ou d'une manière rétrécie depuis la partie étagée (15) vers la direction d'ouverture.

5. Plaque à puits (10) selon l'une quelconque des revendications 1 ou 2, **caractérisée en ce qu'**un angle d'inclinaison θ formé entre une surface inclinée de la partie étagée (15) et une surface horizontale est de 0° ou plus et moins de 90°.

6. Procédé d'utilisation d'une plaque à puits (10) comprenant une plaque (11) et un puits (12) qui est ouvert dans une surface supérieure de la plaque (11), dans lequel
le puits (12) inclut une partie de surface inférieure plate (13) et une partie de paroi circonférentielle (14) montant vers le haut depuis le bord circonférentiel de la partie de surface inférieure (13),
la partie de paroi circonférentielle (14) comporte une partie étagée (15) dans la direction circonférentielle en une position de hauteur arbitraire,
une partie de paroi circonférentielle supérieure (14a), qui est située au-dessus de la partie étagée (15) dans la partie de paroi circonférentielle (14), est plus grande en coupe transversale qu'une partie de paroi circonférentielle inférieure (14b) située au-dessous,
le procédé comprenant l'injection d'un échantillon de liquide (16) dans le puits (12) de telle sorte que le niveau de liquide est situé au-dessus de la partie étagée (15) qui indique une limite inférieure d'une hauteur de niveau de liquide de l'échantillon de liquide (16) injecté et contenu dans le puits (12),
la partie de paroi circonférentielle supérieure (14a) est une partie de paroi circonférentielle supérieure (14a) soumise à un traitement hydrofuge,
la partie de paroi circonférentielle inférieure (14b) est une partie de paroi circonférentielle inférieure (14b) soumise à un traitement hydrofuge,
et la partie étagée (15) est une partie étagée (15) soumise à un traitement hydrofuge et présente une propriété de blocage de lumière de blocage de lumière ayant une longueur d'onde dans une plage de lumière visible,
**caractérisé en ce que**
la partie de surface inférieure (13) est une partie de surface inférieure (13) soumise à un traitement d'hydrophilisation.

7. Procédé d'utilisation d'une plaque à puits (10) selon la revendication 6, comprenant l'exposition du puits (12) dans lequel l'échantillon de liquide (16) a été injecté à de la lumière depuis le côté supérieur de la plaque à puits (10), et l'imagerie de l'échantillon de liquide (16) dans la partie de surface inférieure (13) du puits (12) depuis le côté inférieur de la plaque à puits (10).

8. Procédé d'utilisation d'une plaque à puits (10) selon la revendication 6 ou 7, **caractérisé en ce que** la partie étagée (15) est située en une position de hauteur de telle sorte que le volume de la partie de paroi circonférentielle inférieure (14b) fait la moitié ou moins par rapport au volume du puits (12).

9. Procédé d'utilisation d'une plaque à puits (10) selon l'une quelconque des revendications 6 à 8, **caractérisé en ce que** la partie de paroi circonférentielle inférieure (14b) monte verticalement par rapport à la partie de surface inférieure (13) ou d'une manière rétrécie vers la direction d'ouverture.

10. Procédé d'utilisation d'une plaque à puits (10) selon l'une quelconque des revendications 6 à 9, **caractérisé en ce que** la partie de paroi circonférentielle supérieure (14a) monte verticalement par rapport à la partie de surface inférieure (13) ou d'une manière rétrécie depuis la partie étagée (15) vers la direction d'ouverture.

11. Procédé d'utilisation d'une plaque à puits (10) selon l'une quelconque des revendications 6 à 8, **caractérisé en ce qu'**un angle d'inclinaison θ formé entre une surface inclinée de la partie étagée (15) et une surface horizontale est de 0° ou plus et moins de 90°.
